(19) Europäisches Patentamt
European Patent Office
Office européen des brevets

(11) EP 4 793 406 A1

(12) **EUROPÄISCHE PATENTANMELDUNG**

(43) Veröffentlichungstag:
**19.08.2026 Patentblatt 2026/34**

(21) Anmeldenummer: **25157904.1**

(22) Anmeldetag: **14.02.2025**

(51) Internationale Patentklassifikation (IPC):
***C23C 30/00*** $^{(2006.01)}$ ***B23K 26/00*** $^{(2014.01)}$
***B32B 15/01*** $^{(2006.01)}$ ***B60L 50/64*** $^{(2019.01)}$
***C21D 8/02*** $^{(2026.01)}$ ***H01M 10/613*** $^{(2014.01)}$
***H01M 10/625*** $^{(2014.01)}$ ***H01M 10/6554*** $^{(2014.01)}$
***H01M 10/6556*** $^{(2014.01)}$ ***H01M 50/249*** $^{(2021.01)}$
***C22C 21/02*** $^{(2006.01)}$ ***C22C 38/04*** $^{(2006.01)}$
***H01M 50/222*** $^{(2021.01)}$ ***H01M 50/244*** $^{(2021.01)}$

(52) Gemeinsame Patentklassifikation (CPC):
**H01M 10/6556; B32B 15/012; B60L 50/64; C21D 7/10; C21D 7/13; C21D 9/0068; C21D 9/46; C22C 21/02; C22C 38/02; C22C 38/04; C22C 38/08; C22C 38/12; C22C 38/14; C22C 38/20; C22C 38/22;** (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Benteler Automobiltechnik GmbH**
**33102 Paderborn (DE)**

(72) Erfinder:
- **FRISCHKORN, Conrad**
  **33102 Paderborn (DE)**
- **BUSE, Christian**
  **33165 Lichtenau (DE)**
- **KÄSEWIETER, Karoline**
  **33102 Paderborn (DE)**

(74) Vertreter: **Ksoll, Peter**
**Bockermann Ksoll**
**Griepenstroh Osterhoff**
**Patentanwälte**
**Bergstrasse 159**
**44791 Bochum (DE)**

Bemerkungen:
Geänderte Patentansprüche gemäss Regel 137(2) EPÜ.

(54) **TEMPERIERPLATTE ZUR VERBINDUNG MIT EINEM BATTERIEGEHÄUSE, BATTERIEGEHÄUSE FÜR EIN KRAFTFAHRZEUG SOWIE VERFAHREN ZUR HERSTELLUNG EINES BATTERIEGEHÄUSES**

(57) Die Erfindung betrifft eine Temperierplatte (1) zur Verbindung mit einem Batteriegehäuse (8) eines Kraftfahrzeugs, aufweisend eine Temperierkanalstruktur (2) mit wenigstens einer Temperierkanalprofilierung (3), wobei die Temperierplatte (1) aus einem Mangan-Bor-Stahlblech (22) hergestellt und warmgeformt ist, wobei die Temperierplatte (1) außenseitig eine Aluminium-Legierungsschicht aufweist, wobei die Temperierplatte (1) eine Zugfestigkeit Rm > 1.000 MPa und ein Martensitgefüge aus wenigstens 50 Vol.-% Martensit aufweist.

Die Erfindung betrifft weiterhin ein Batteriegehäuse aufweisend eine erfindungsgemäße Temperierplatte sowie ein Verfahren zur Herstellung eines entsprechenden Batteriegehäuses.

1
6
7
7
6
2
3
7
3
3
6
7
HS
H
4
5

Fig. 1

EP 4 793 406 A1

(52) Gemeinsame Patentklassifikation (CPC): (Forts.)
**C22C 38/24; C22C 38/32; C22C 38/42; C22C 38/50; C22C 38/54; H01M 10/613; H01M 10/625; H01M 10/6554; H01M 50/222; H01M 50/244; H01M 50/249;** C21D 2211/008; H01M 50/236

## Beschreibung

Die vorliegende Erfindung betrifft eine Temperierplatte zur Verbindung mit einem Batteriegehäuse eines Kraftfahrzeugs gemäß den Merkmalen im Anspruch 1. Die Erfindung betrifft weiterhin ein entsprechendes Batteriegehäuse für ein Kraftfahrzeug mit den Merkmalen im Anspruch 11, sowie ein Verfahren zu dessen Herstellung gemäß den Merkmalen im Anspruch 18.

Elektrisch betriebene Kraftfahrzeuge weisen in der Regel ein Batteriegehäuse auf, in welchem die zum Antrieb benötigten Batteriepakete angeordnet sind. Das Batteriegehäuse dient zum einen dem Schutz der Batteriepakete und zum anderen der Integration derselben in den Fahrzeugaufbau.

Um die während des Betriebs des Kraftfahrzeugs von den Batteriepaketen erzeugte Wärme abzuführen, ist es im Stand der Technik bekannt, die Batteriegehäuse mit Kühlvorrichtungen zu versehen. Eine Möglichkeit besteht darin, eine zusätzliche Kühlplatte mit dem Batteriegehäuse zu verbinden. Entsprechende Kühlplatten weisen Kühlkanalprofilierungen auf, welche, wenn sie mit den Böden der Batteriegehäuse verbunden werden, Kühlkanäle ausbilden. Durch diese Kühlkanäle kann ein Fluid geleitet werden, welches die Wärme vom Batteriegehäuse abführt. Die Kühlplatten können sowohl innenseitig als auch außenseitig mit dem Boden des Batteriegehäuses verbunden werden.

Entsprechende Kühlplatten sind in der Regel aus einer weichen Aluminiumlegierung hergestellt, um Gewicht einzusparen. Sind die Kühlplatten außenseitig an dem Batteriegehäuse befestigt, wird in der Regel ein separater Unterfahrschutz benötigt, da ansonsten eine Beschädigungsgefahr der Kühlplatten besteht. Innenseitig mit dem Boden gekoppelte Kühlplatten aus weichen Aluminiumlegierungen können hingegen nachteilig für die Befestigung des Batteriegehäuses am Kraftfahrzeug sein. Die weichen Aluminiumlegierungen begrenzen die möglichen Einspannkräfte, da sich die Kühlplatten bei zu hoher mechanischer Belastung verformen können.

Ein weiteres Konzept zur Kühlung des Batteriegehäuses sieht vor, dass in dem Boden des Batteriegehäuses selbst Kühlkanalprofile einstückig und materialeinheitlich ausgebildet sind und ein Deckblech über den Kühlkanalprofilen angeordnet ist, so dass wiederum zwischen den Kühlkanalprofilen und dem Deckblech die Kühlkanäle ausgebildet werden. Die Ausbildung der Kühlkanalprofilierungen direkt in den Boden des Batteriegehäuses kann jedoch nachteilig für die Gestaltungsfreiheit der Kühlkanalstruktur sein.

Hiervon ausgehend ist die Aufgabe der vorliegenden Erfindung eine verbesserte Temperierplatte aufzuzeigen, die insbesondere widerstandsfähiger gegenüber äußeren Belastungen ist. Weiterhin ist die Aufgabe der Erfindung ein Batteriegehäuse bereitzustellen, welches eine entsprechende Temperierplatte aufweist. Eine weitere Aufgabe der Erfindung besteht darin, ein Verfahren zur Herstellung eines entsprechenden Batteriegehäuses aufzuzeigen.

Der erste Teil der Aufgabe wird durch eine Temperierplatte zur Verbindung mit einem Batteriegehäuse eines Kraftfahrzeugs mit den Merkmalen im Anspruch 1 gelöst. Der zweite Teil der Aufgabe wird durch ein Batteriegehäuse für ein Kraftfahrzeug mit den Merkmalen im Anspruch 11 gelöst. Der verfahrenstechnische Teil der Aufgabe wird durch ein Verfahren zur Herstellung eines Batteriegehäuses gemäß den Merkmalen im Anspruch 18 gelöst.

Vorteilhafte Ausführungsvarianten der Erfindung sind Gegenstand der abhängigen Ansprüche.

Die vorliegende Erfindung betrifft eine Temperierplatte zur Verbindung mit einem Batteriegehäuse eines Kraftfahrzeugs, insbesondere eines Elektrofahrzeugs. Die Temperierplatte weist eine Temperierkanalstruktur mit wenigstens einer Temperierkanalprofilierung zur Ausbildung von Temperierkanälen auf. Die Temperierplatte weist somit eine insbesondere ebene Grundplatte auf, in der die wenigstens eine Temperierkanalprofilierung ausgebildet ist. Die wenigstens eine Temperierkanalprofilierung ist insbesondere eine kanalförmig bzw. rinnenförmig verlaufende Prägung, mithin Ausstellung in der Grundplatte, welche im Querschnitt bevorzugt trapezförmig ausgebildet ist.

Die Temperierplatte ist aus einem Mangan-Bor(MnB)-Stahlblech hergestellt. MnB-Stähle sind hochfeste Stähle, die eine exzellente Härtbarkeit aufweisen. Erfindungsgemäß ist die Temperierplatte warmgeformt. Das bedeutet, dass das MnB-Stahlblech zunächst erwärmt wird, insbesondere auf die Austenitisierungstemperatur, anschließend umgeformt und sodann abgeschreckt wird, um die Temperierplatte zu erhalten. Durch das Warmformen kann die Festigkeit der Temperierplatte zusätzlich erhöht werden. Die Temperierkanalstruktur wird während des Umformschritts des Warmformens in das MnB-Stahlblech eingebracht, insbesondere durch ein Pressverfahren.

Erfindungsgemäß weist die Temperierplatte eine außenseitige Aluminium-Legierungsschicht auf. Die Aluminium-Legierungsschicht ist vorzugsweise durch eine vor dem Warmformen auf das MnB-Stahlblech aufgebrachte Vorbeschichtung ausgebildet. Die Vorbeschichtung weist bevorzugt neben Aluminium und unvermeidbaren Verunreinigungen folgende Zusammensetzung auf:

- 5,9 Gew.-% bis 12,9 Gew.-% Si (Silizium),
- 0,5 Gew.-% bis 4,0 Gew.-% Fe (Eisen).

Die Al-Vorbeschichtung kann einseitig oder beidseitig auf dem MnB-Stahlblech aufgebracht sein. Das Aufbringen der Vorbeschichtung vor dem Warmformen hat den Vorteil, dass das MnB-Stahlblech vor Oxidation und Verzunderung geschützt und eine Entkohlung verhindert wird. Die Aluminium-Legierungsschicht setzt sich aus mehreren Phasen bzw. Teilschichten zusammen, die jeweils unterschiedlichen Konzentrationen von

Al, Si und Fe aufweisen, wobei Al und Si aus der Vorbeschichtung und Fe neben den Anteilen in der Vorbeschichtung hauptsächlich aus dem MnB-Stahlblech stammen. Die Aluminium-Legierungsschichtbildung erfolgt während des Warmformens, insbesondere bei der Erwärmung in einem Ofen auf Austenitisierungstemperatur und der damit verbundenen Haltephase in dem Ofen unter getrockneter Luftatmosphäre. Die Luftatmosphäre weist bevorzugt neben Stickstoff und unvermeidbaren Spurengasen 20 bis 22 Gew.-% Sauerstoff auf. Durch die Aluminium-Legierungsschicht kann die Schweißbarkeit der warmgeformten Temperierplatte verbessert werden, da sie eine dünne, diffusionsgehärtete Schutzschicht ist. Zudem bietet die Aluminium-Legierungsschicht nach dem Warmformen einen guten Schutz gegen Rost und Korrosion. Somit ist das Aufbringen einer zusätzlichen Korrosionsschutzschicht nach dem Umformen nicht zwingend erforderlich.

Aufgrund der erfindungsgemäßen Herstellung weist die Temperierplatte eine Zugfestigkeit Rm größer als 1.000 MPa, bevorzugt größer 1.300 MPa, und ein Martensitgefüge aus wenigstens 50 Vol.-% Martensit, bevorzugt wenigstens 80 Vol.-% Martensit auf. Die Zugfestigkeit Rm sollte jedoch nicht größer als 2000 MPa sein, da Zugfestigkeiten oberhalb dieser Grenze kaum ein weiteres Leichtbaupotential bieten, jedoch nachteilig im Hinblick auf die Bruchdehnung und Duktilitätseigenschaften insbesondere bei einem Crashfall sind. Im Vergleich zu im Stand der Technik bekannten Temperierplatten, insbesondere aus weichen Aluminiumlegierungen, ist die erfindungsgemäße Temperierplatte somit deutlich widerstandsfähiger gegen Druckbelastungen, insbesondere aus dem Temperierfluidsystem selbst und anderweitigen auftretenden Spannungen, insbesondere bei Crash- und Überfahrereignissen des Kraftfahrzeugs. Vorzugsweise handelt es sich bei dem MnB-Stahl um einen der Stahltypen bzw. um eine der Stahllegierungen A bis F, deren Zusammensetzungen in der nachfolgend eingeblendeten Tabelle in Gew.-% angegeben sind. Einträge in denen auf ein weiteres Element Bezug genommen wird, beispielsweise bei Stahltyp D unter Cr max "0,5-Mo" sind so auszulegen, dass der jeweilige Wert des angegebenen Elements aus der entsprechenden Spalte der Tabelle von dem aufgelisteten Zahlenwert abzuziehen ist.

| | C | | Si | | Mn | | P | S | Al | | B | | Cr | | Cu | N | Nb | | Ni | | Ti | | V | Mo |
|---|---|---|---|---|---|---|---|---|---|---|---|---|---|---|---|---|---|---|---|---|---|---|---|---|
| | min | max | min | max | min | max | max | max | min | max | min | max | min | max | max | max | min | max | min | max | min | max | max | max |
| Stahl A | 0,19 | 0,25 | 0,1 | 0,4 | 1,1 | 1,4 | 0,02 | 0,01 | 0 | 0,06 | 0,004 | 0,1 | | 0,3 | 0,1 | | | 0,05-Ti | 0 | 0,1 | 0,01 | 0,1 | | 0,35 |
| Stahl B | 0,20 | 0,23 | 0,2 | 0,3 | 1,1 | 1,4 | 0,02 | 0,01 | 0 | 0,06 | 0,004 | 0,1 | 0,1 | 0,3 | 0,1 | 0,01 | | 0,05-Ti | 0 | 0,1 | 0,02 | 0,05 | 0,01 | 0,35 |
| Stahl C | 0,31 | 0,37 | 0,1 | 0,6 | 1 | 1,5 | 0,03 | 0,02 | | 0,1 | 0,001 | 0,004 | 0,08 | 0,35 | 0,2 | 0,2 | | 0,1 | | 0,2 | 0,002 | 0,05 | | 0,35 |
| Stahl D | 0,33 | 0,35 | 0,15 | 0,35 | 1 | 1,5 | 0,03 | 0,02 | 0,01 | 0,08 | 0,001 | 0,004 | 0,08 | 0,5-Mo | 0,2 | 0,2 | 0 | 0,06 | | 0,2 | 0,005 | 0,02 | 0,01 | 0,5-Cr |
| Stahl E | 0,08 | 0,13 | | 0,7 | 0,8 | 1,9 | 0,05 | 0,05 | | 0,1 | 0,001 | 0,003 | | 0,15 | 0,2 | 0,2 | | 0,1 | | | | 1,2 | 0,1 | 0,1 |
| Stahl F | 0,09 | 0,12 | 0,02 | 0,6 | 1,2 | 1,8 | 0,03 | 0,01 | 0,01 | 0,07 | 0,0007 | 0,002 | | 0,15 | 0,2 | 0,2 | 0 | 0,1 | | | 0,03 | 0,2 | 0,1 | 0,1 |

Bei den Stahlsorten A und B kann es sich insbesondere um einen 22MnB5 Stahl handeln. Bei der Stahlsorte C insbesondere um einen 34MnB5 Stahl. Bei der Stahlsorte D um einen 37MnB5 Stahl. Bei den Stahlsorten E und F handelt es sich insbesondere um den Stahltyp Ductibor 1000. Diese Stahltypen haben sich im Rahmen der Erfindung aufgrund ihrer hochfesten Eigenschaften als besonders vorteilhaft erwiesen.

Bevorzugt weist die Temperierkanalprofilierung einen mäanderförmigen und/oder mehrfach verzweigenden schlangenlinienförmigen Verlauf auf. Mäanderför-

mig bedeutet im Rahmen der Erfindung, dass die Temperierkanalprofilierung einen regelmäßigen geschwungenen Schleifen- bzw. S-förmigen verlauf aufweist. Im Vergleich dazu kann die Temperierkanalprofilierung bei einer schlangenlinienförmigen Ausbildung auch unregelmäßige Verläufe aufweisen. Die mäanderförmige und/oder schlangenlinienförmige Ausbildung der Temperierkanalprofilierung sorgt für eine gleichmäßige Kühlung bzw. Erwärmung der mit der Temperierplatte direkt oder indirekt in Kontakt stehenden Batterien. Zudem kann durch entsprechende Verläufe eine möglichst große Fläche der Temperierplatte mit entsprechenden Temperierkanalprofilierungen versehen werden.

Insbesondere weisen 70 % bis 90 %, bevorzugt 70 % bis 80 % der Temperierplattenoberfläche entsprechende Temperierkanalprofilierungen auf.

In weiterer bevorzugter Ausgestaltungsvariante sind die Temperierkanalprofilierungen derart in die Temperierplatte eingeprägt, dass zwei Temperierkanalprofilierungen parallel verlaufend angeordnet sind. Es laufen somit zwei Temperierkanalprofilierungen parallel über die Temperierplatte verteilt nebeneinander. Hierdurch wird die effektive Temperierleistung nochmals gesteigert. Im Sinne der Erfindung kann jedoch auch die Temperierkanalstruktur derart ausgebildet sein, dass insgesamt eine Temperierkanalprofilierung über Temperierplatte verteilt ausgebildet ist.

Es hat sich im Rahmen der Erfindung weiterhin als vorteilhaft erwiesen, wenn die Temperierplatte eine Blechstärke von 0,5 mm bis 2,0 mm, insbesondere von 0,7 mm bis 1,5 mm aufweist. Eine entsprechende Blechstärke bietet einen vorteilhaften Kompromiss zwischen Stabilität und Gewicht der Temperierplatte.

Die Aluminium-Legierungsschicht weist bevorzugt eine Schichtdicke von 7 μm bis 50 μm, bevorzugt von 10 μm bis 44 μm, besonders bevorzugt von 12 bis 40 μm auf. Die Schichtdicke bezieht sich auf die Summer aller Teilschichten der außenseitigen Alum inium-Legierungsschicht.

Zwischen benachbart verlaufenden Temperierkanalprofilierungen bzw. Temperierkanalprofilierungsabschnitten kann ein Versteifungsvorsprung ausgebildet sein. Durch entsprechende Versteifungsvorsprünge kann die Stabilität der Temperierplatte zusätzlich erhöht werden, so dass diese bei einer außenseitigen Verbindung mit dem Boden eines Batteriegehäuses gleichzeitig eine Unterfahrschutzfunktion erfüllt.

Vorzugsweise ist wenigstens eine Sicke in der Temperierkanalprofilierung angeordnet. Die Sicke ist insbesondere in einer Biegung bzw. Wendung der Temperierkanalprofilierung angeordnet. Der effektive Durchmesser des durch die Temperierkanalprofilierung ausgebildeten Temperierkanals ist in den Biegungen, insbesondere wenn diese Biegungen einen besonders engen Eckenradius aufweisen, verbreitert. Die zu durchströmende Querschnittsfläche wird durch die Sicke auf einem ähnlichen Querschnittsflächenniveau gehalten. Gleichzeitig kann die Sicke selbst in ihrem Verlauf in Längsrichtung der Temperierkanalprofilierung gekrümmt sein. Die Krümmung erfolgt dann in Richtung der Biegung bzw. Wendung der Temperierkanalprofilierung. Hierdurch tritt eine Strömungslenkung bzw. Strömungsleitung auf.

Insbesondere weist die Temperierkanalprofilierung eine Höhe von 2 mm bis 15 mm, bevorzugt eine Höhe von 3 mm bis 12 mm, besonders bevorzugt eine Höhe von 4 mm bis 10 mm auf. Dieses Höhenintervall hat sich im Rahmen der Erfindung als besonders vorteilhaft erwiesen, da die Temperierkanalprofilierungen insbesondere bei einer Anordnung der Temperierplatte unterhalb des Batteriegehäuses eines Kraftfahrzeugs nicht zu weit vom Kraftfahrzeug in Richtung des Untergrunds hinausragen. Zugleich ist die sich ergebende Querschnittsfläche der Temperierkanalprofilierung durch das erfindungsgemäße Höhenintervall so dimensioniert, dass eine ausreichende Temperierleistung durch das durch die Temperierkanalprofilierungen strömende Fluid sichergestellt ist.

Bevorzugt ergibt sich eine Breite der Temperierkanalprofilierung zwischen 30 und 70 mm, besonders bevorzugt zwischen 40 und 60 mm und besonders bevorzugt von ca. 50 mm.

Die Temperierplatte weist bevorzugt wenigstens eine Durchgangsöffnung auf, wobei die Durchgangsöffnung insbesondere zwischen zwei benachbart verlaufenden Temperierkanalprofilierungen bzw. Temperierkanalprofilierungsabschnitten angeordnet ist. Über die Durchgangsöffnung kann die Temperierplatte gegebenenfalls zusammen mit dem Batteriegehäuse an der Rahmenstruktur eines Kraftfahrzeugs befestigt werden.

Vorzugsweise ist die Temperierplatte pressgehärtet, um die Härte und Widerstandsfähigkeit der Temperierplatte gegenüber Belastungen zu erhöhen.

Die Erfindung betrifft ferner ein Batteriegehäuse für ein Kraftfahrzeug, insbesondere Elektrofahrzeug. Die Erfindung betrifft somit auch ein Elektrofahrzeug mit Batteriegehäuse bzw. einen Elektrofahrzeugbatteriegehäuse, Das Batteriegehäuse weist einen Boden und wenigstens vier mit dem Boden verbundene Seitenwände auf, welche zusammen einen Innenraum zur Aufnahme oder Abdeckung von Antriebsbatterien ausbilden. Der Boden und die mit dem Boden verbundenen Seitenwände bilden eine Batteriewanne aus, wobei die Batteriewanne sowohl die Funktion einer Haube, mithin einer Abdeckung, als auch die Funktion einer Wanne übernehmen kann. Wird die Batteriewanne als Wanne genutzt, weist die Öffnung des Innenraums nach oben, mithin zu einer Unterseite des Kraftfahrzeugs. Wird die Batteriewanne hingegen als Haube genutzt, weist die Öffnung der Batteriewanne nach unten, mithin weg vom Fahrzeugboden.

Das Batteriegehäuse umfasst eine Temperierplatte gemäß einem der Ansprüche 1 bis 10. Erfindungsgemäß gibt es zwei Möglichkeiten, wie die Temperierplatte in das Batteriegehäuse integriert ist.

In einer ersten Variante ist die Temperierplatte mit dem Boden der Batteriewanne fluiddicht mittels Laserschweißen oder Kleben verbunden. Durch die fluiddichte Verbindung zwischen Temperierplatte und Boden, welcher insbesondere eben ausgebildet ist, bildet der Boden mit den Temperierkanalprofilierungen Temperierkanäle aus. Durch die Temperierkanäle kann ein Fluid geleitet werden, welches insbesondere zur Kühlung der innerhalb des Batteriegehäuses angeordneten Batterien genutzt werden kann. Es ist jedoch auch möglich, mit dem Temperierfluid die Batterien im Inneren des Batteriegehäuses zu erwärmen.

In der zweiten Alternative ist die Temperierplatte mit einem Deckel des Batteriegehäuses fluiddicht laserverschweißt oder verklebt. Der Deckel ist gegenüberliegend zum Boden der Batteriewanne angeordnet und deckt somit den Innenraum der Batteriewanne ab. Auch der Deckel ist insbesondere eben ausgebildet. Zwischen dem Deckel und den Temperierkanalprofilierungen werden Temperierkanäle ausgebildet, durch die das Temperierfluid geleitet werden kann.

Bei beiden erfindungsgemäßen Kopplungsvarianten kann die Temperierplatte innenseitig oder außenseitig mit dem Boden bzw. Deckel verbunden sein. Innenseitig bedeutet, dass die Temperierplatte innerhalb des durch den Boden und die Seitenwände begrenzten Innenraums angeordnet ist. Außenseitig bedeutet, dass die Temperierplatte nicht in dem Innenraum der Batteriewanne angeordnet ist, sondern außerhalb des Innenraums mit dem Boden oder dem Deckel verbunden ist.

Die einen Boden und wenigstens vier Seitenwände aufweisende Batteriewanne kann einstückig geformt sein. Insbesondere ist die Batteriewanne aus einem Stahlblech hergestellt, beispielsweise ein MnB-Stahlblech, welches zur Batteriewanne umgeformt, insbesondere kaltumgeformt wurde. Alternativ können der Boden und die wenigstens vier Seitenwände auch aus einem Stahlblech ausgeschnitten und anschließend miteinander zu der Batteriewanne gefügt, insbesondere verschweißt werden.

Bevorzugt sind der Boden und/oder die Seitenwände aus einem vorbeschichteten Stahlblech hergestellt, wobei die Vorbeschichtung eine Al-Si-Vorbeschichtung oder eine Zn-Vorbeschichtung sein kann. Die Vorbeschichtung dient insbesondere dem Korrosionsschutz der Batteriewanne.

Bevorzugt sind Verstärkungsprofile außerhalb des Innenraums an gegenüberliegenden Seitenwänden des Batteriegehäuses angeordnet. Die Verstärkungsprofile stehen insbesondere in Kraftfahrzeugvertikalrichtung vom Kraftfahrzeug aus gesehen über die Temperierkanäle über. Durch die Verstärkungsprofile können die Steifigkeit und die Crasheigenschaften des Batteriegehäuses verbessert werden.

Vorzugsweise ist die Temperierplatte entlang ihrer Außenkanten umlaufend mit dem Boden oder dem Deckel verschweißt. Insbesondere ist sie mittels einer Kehlnaht mit dem Boden oder dem Deckel laserverschweißt. So kann eine sichere und fluiddichte Verbindung zwischen der Temperierplatte und dem Boden oder dem Deckel sichergestellt werden. Bevorzugt greift die Schweißnaht maximal in 90 %, besonders bevorzugt maximal in 80 % der Stärke des Bodens oder des Deckels ein. So können Undichtigkeiten der erforderlichen Schweißbadstützen vermieden werden.

Das erfindungsgemäße Verfahren zur Herstellung eines Batteriegehäuses für ein Kraftfahrzeug, insbesondere eines Batteriegehäuses gemäß einem der Ansprüche 11 bis 17, weist die folgenden Verfahrensschritte auf:

- Bereitstellen eines MnB-Stahlblechs und anschließende Vorbeschichtung wenigstens einer Seite des MnB-Stahlblechs, wobei die Vorbeschichtung neben Al (Aluminium) und unvermeidbaren Verunreinigungen folgende Zusammensetzung aufweist:

  - 5,9 Gew.-% bis 12,9 Gew.-% Si (Silizium),

  - 0,5 Gew.-% bis 4,0 Gew.-% Fe (Eisen).

Anschließendes Warmformen des MnB-Stahlblechs zu einer Temperierplatte mit einer Temperierkanalstruktur, die wenigstens eine Temperierkanalprofilierung aufweist.

- Bereitstellen wenigstens eines zweiten Stahlblechs, insbesondere aus MnB-Stahl, und anschließendes Umformen des zweiten Stahlblechs zu einer Batteriewanne mit einem Boden und vier Seitenwänden. Alternativ kann das wenigstens zweite Stahlblech zu einem Boden und vier Seitenwänden zugeschnitten, gegebenenfalls umgeformt und anschließend der Boden und die vier Seitenwände zu einer Batteriewanne gefügt werden. Es ist auch denkbar, dass mehrere Stahlbelche für den Zuschnitt zur Verfügung gestellt werden, sodass der Boden und die Seitenwände aus unterschiedlichen Stahltypen ausgeschnitten werden. Die Batteriewanne kann somit erfindungsgemäß entweder einstückig mittels Umformen oder aus separaten Zuschnittteilen mittels Fügen hergestellt werden.

- Fluiddichtes Verschweißen, insbesondere Laserschweißen der Temperierplatte mit dem Boden der Batteriewanne, um das Batteriegehäuse zu erhalten,

oder

- Bereitstellen eines Deckels aus Stahl, anschließendes Verschweißen der Temperierplatte mit dem Deckel und Anordnung des Deckels auf einer Öffnung der Batteriewanne, um das Batteriegehäuse zu erhalten.

Erfindungsgemäß kann die Temperierplatte somit mit dem Boden der Batteriegehäusewanne oder mit dem Deckel des Batteriegehäuses verbunden werden. Die Temperierplatte kann innenseitig oder außenseitig mit dem Boden oder dem Deckel verbunden werden.

Weitere Vorteile, Merkmale und Eigenschaften der vorliegenden Erfindung sind Gegenstand der nachfolgenden Beschreibung. Diese zeigt exemplarisch bevorzugte Ausgestaltungsvarianten der Erfindung und dient dem einfachen Verständnis eben dieser. Bei den Figuren handelt es sich lediglich um Prinzipskizzen, welche den grundlegenden Aufbau und die Funktion der Erfindung verdeutlichen sollen. Einzelnen Ausgestaltungsvarianten können beliebig untereinander kombiniert werden, ohne dabei den Rahmen der Erfindung zu verlassen. Es zeigen:

Figur 1 eine perspektivische Ansicht einer Temperierplatte,

Figur 2 eine perspektivische Ansicht einer ersten Ausführungsvariante eines Batteriegehäuses,

Figur 3 eine Unteransicht einer zweiten Ausführungsvariante des Batteriegehäuses,

Figur 4a die zweite Ausführungsvariante des Batteriegehäuses gemäß der Schnittlinie A-A aus Figur 3,

Figur 4b die erste Ausführungsvariante des Batteriegehäuses gemäß der Schnittlinie B-B aus Figur 2,

Figur 5a - c mögliche Ausführungsvarianten des Batteriegehäuses in einer Längsschnittsansicht,

Figur 6a - d mögliche Ausführungsvarianten des Batteriegehäuses in einer Längsschnittsansicht,

Figur 7a - c mögliche Ausführungsvarianten des Batteriegehäuses in einer Längsschnittsansicht,

Figur 8a - c Verfahren zur Herstellung einer ersten Ausführungsvariante des Batteriegehäuses und

Figur 9a - c Verfahren zur Herstellung einer zweiten Ausführungsvariante des Batteriegehäuses.

In den Figuren werden für gleiche oder einander entsprechende Bauteile dieselben Bezugszeichen verwendet, auch wenn eine wiederholte Beschreibung aus Vereinfachungsgründen entfällt.

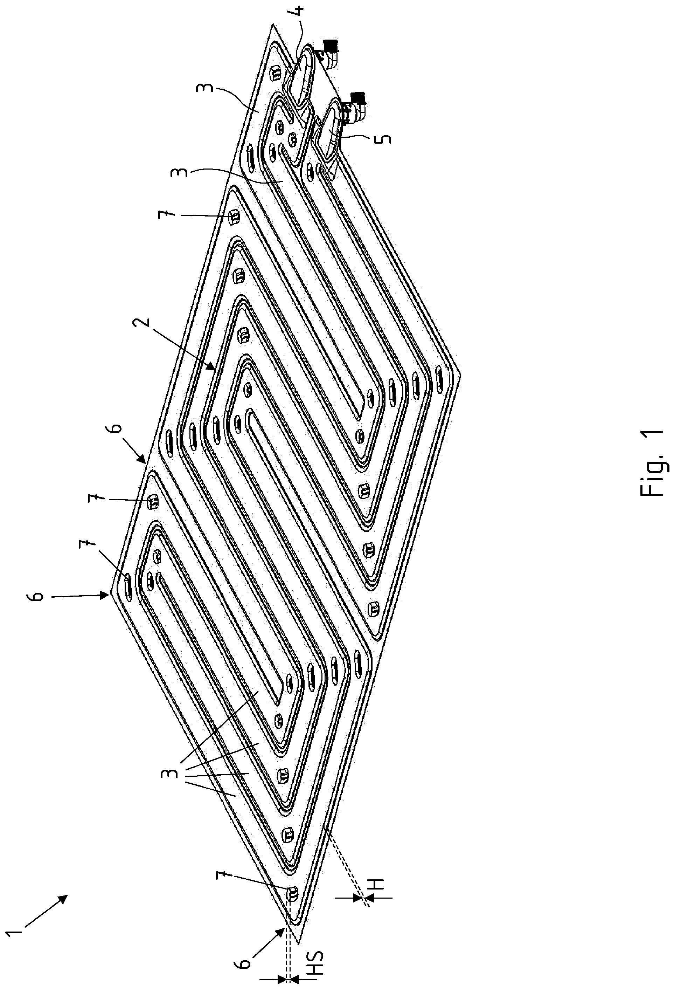

Die Figur 1 zeigt die perspektivische Ansicht einer erfindungsgemäßen Temperierplatte 1 zur Verbindung mit einem nicht näher dargestellten Batteriegehäuse eines Kraftfahrzeugs. Die Temperierplatte 1 weist eine Temperierkanalstruktur 2 auf, die aus Temperierkanalprofilierungen 3 ausgebildet ist. Die Temperierkanalprofilierungen 3 verlaufen mäanderförmig, mithin wechselweise in parallelen Reihen über die Temperierplatte 1. Die Temperierplatte 1 weist einen Einlassstutzen 4 und einen Auslassstutzen 5 auf, die jeweils in die Temperierkanalprofilierungen 3 übergehen. Mit dem Einlassstutzen 4 sind zwei separate Temperierkanalprofilierungen 3 verbunden, welche über die gesamte Temperierplatte 1 benachbart zueinander verlaufen und in dem Auslassstutzen 5 münden.

Die Temperierplatte 1 ist aus einem MnB-Stahlblech hergestellt und warmgeformt. Die Temperierkanalprofilierungen 3 sind während des Warmformvorgangs einstückig aus dem MnB-Stahlblech mit einem Presswerkzeug ausgeformt.

Das MnB-Stahlblech weist vor dem Warmformen eine Vorbeschichtung auf, wobei die Vorbeschichtung neben Aluminium und unvermeidbaren Verunreinigungen 5,9 bis 12,9 Gew.-% Si und 0,5 bis 4,0 Gew.-% Fe aufweist. Durch das Warmformen wird aus der Vorbeschichtung eine Aluminium-Legierungsschicht außenseitig auf die Temperierplatte 1 ausgebildet. Die Temperierplatte 1 weist ferner eine Zugfestigkeit Rm größer als 1.000 MPa, insbesondere 1.300 MPa und ein Martensitgefüge aus wenigstens 50 Vol.-%, bevorzugt 80 Vol.-% Martensit auf. Die erfindungsgemäße Temperierplatte 1 weist somit eine gegenüber den im Stand der Technik bekannten Temperierplatten deutlich erhöhte Härte bzw. Festigkeit auf, so dass diese ohne zusätzliche Schutzvorrichtungen an dem Boden eines Batteriegehäuses eines Kraftfahrzeugs angebracht werden kann. Ist die Temperierplatte 1 im Inneren des Batteriegehäuses mit einem Boden oder einen die Batterien kontaktierenden Deckel des Batteriegehäuses verbunden, wird aufgrund ihrer hohen Härte bzw. Festigkeit die Gefahr einer Beschädigung der Temperierplatte 1 durch beim Verschrauben der Batterien auftretende Spannkräfte reduziert.

Die Temperierkanalprofilierungen 3 weisen eine Höhe H von 2 mm bis 15 mm auf. Durch eine entsprechende Höhe und möglichst relativ dazu sehr breite Kanalquerschnitte kann eine ausreichende Querschnittsfläche innerhalb der Temperierkanalprofilierung erreicht werden, ohne die Aufbauhöhe der Temperierplatte 1 zu sehr zu erhöhen.

In den Biegungen 6 der Temperierkanalprofilierungen 3 sind optional jeweils Sicken 7 angeordnet. Die Höhe HS der Sicken 7 entspricht der Höhe H der Temperierkanalprofilierungen 3. Durch die Sicken 7 bleibt die effektive Strömungsquerschnittsfläche der Temperierkanalprofilierungen 3 auch in den Biegungen 6 annähernd konstant. Dies sorgt für eine gleichmäßige Strömung des Temperierfluids innerhalb der Temperierkanalprofilierun-

gen 3 und vermeidet verminderte Kühlleistung in den Biegungen durch eine zusätzliche Turbulenzwirkung..

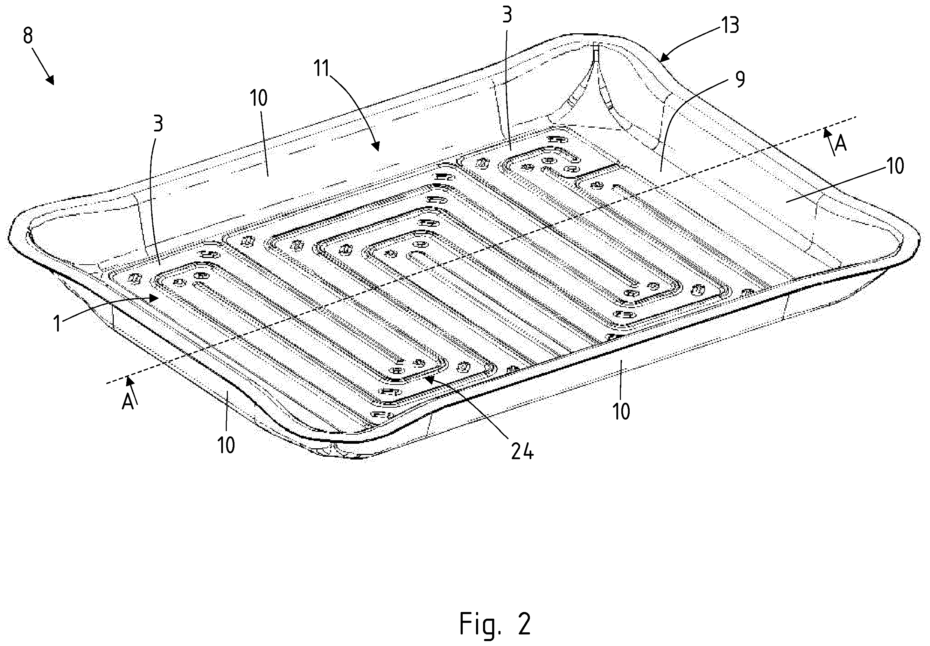

Die Figur 2 zeigt eine erste Ausführungsvariante eines erfindungsgemäßen Batteriegehäuses 8 für ein nicht näher dargestelltes Kraftfahrzeug in einer Perspektive. Das Batteriegehäuse 8 weist einen Boden 9 und vier mit dem Boden 9 verbundene Seitenwände 10 auf. Der Boden 9 und die Seitenwände 10 bilden zusammen eine einstückig und werkstoffeinheitlich geformte Batteriewanne 13 aus und schließen zusammen einen Innenraum 11 zur Aufnahme bzw. Abdeckung von nicht näher dargestellten Batterien ein.

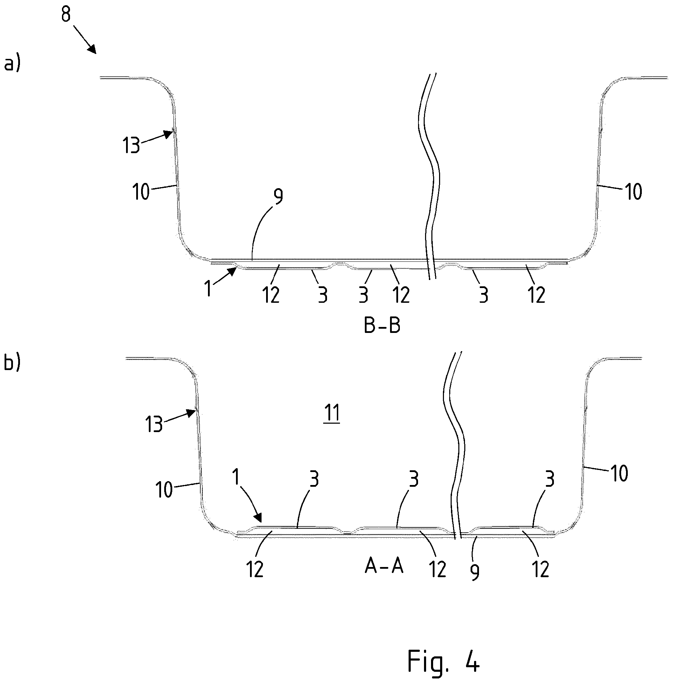

Erfindungsgemäß ist eine Temperierplatte 1 fluiddicht mittels Laserschweißen oder Kleben mit dem Boden 9 verbunden. Dergestalt, dass zwischen den Temperierkanalprofilierungen 3 der Temperierkanalstruktur 2 und dem Boden 9 Temperierkanäle 12 ausgebildet sind. Dies ist insbesondere in der Figur 4b gezeigt, wo die in der Figur 2 gezeigte erste Ausführungsvariante des Batteriegehäuses 8 im Schnitt A-A dargestellt ist. Die Figur 4b zeigt nicht den gesamten Schnitt A-A, sondern lediglich die an die Seitenwände 10 angrenzenden Endbereiche. Auch die hintere Seitenwand 10 sowie Deckel und die den Boden 9 kontaktierenden Batterien sind aus Vereinfachungsgründen nicht dargestellt.

In dem in der Figur 2 und Figur 4b gezeigten ersten Ausführungsbeispiel ist die Temperierplatte 1 innenseitig mit dem Boden 9 verbunden. Innenseitig bedeutet, dass die Temperierplatte 1 innerhalb des Innenraums 11 angeordnet ist. Dies hat den Vorteil, dass die hochfesten Temperierkanalprofilierungen 3 durch ihr Eigengewicht oder Verschrauben der Batterien nicht verformt werden. Diese Ausführungsvariante hat jedoch den Nachteil, dass der außenseitige Boden 9 der Batteriewanne 13, insbesondere wenn sie aus einem weniger festen Stahls ausgebildet ist, anfällig gegen mechanische Beschädigungen, beispielsweise bei Steinschlägen oder Überfahrereignissen ist.

Die Temperierplatte 1 ist zwischen benachbart verlaufenden Temperierkanalprofilierungen 3 bzw. Temperiekanalprofilierungsabschnitten derselben mit dem Boden 9 verschweißt. Dies kann mittels einer Stichschweißung oder einer Durchschweißung erfolgen. Die Schweißnähte (24) sind durchgängig und fluiddicht ausgeführt und in der Figur 2 als jeweils äußere schwarze Linie der Kanalprofilierungen 3 erkennbar.

Die Temperierkanalprofilierungen 3 und somit auch die Temperierkanäle 12 sind in den in den Figuren 4a und 4b gezeigten Ausführungsbeispielen im Querschnitt trapezförmig ausgebildet.

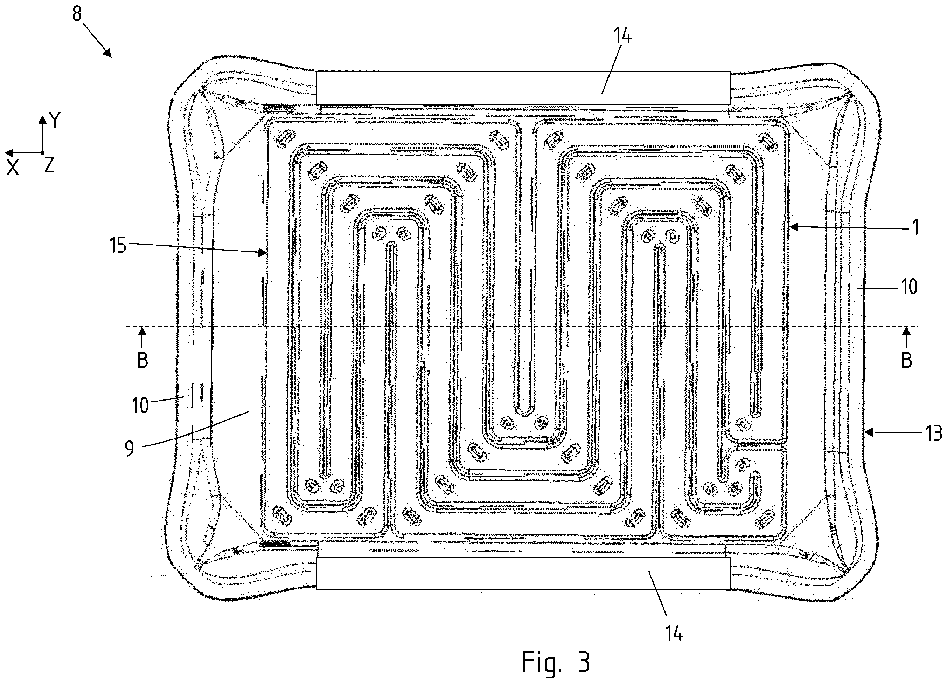

Die Figur 3 zeigt eine zweite Ausführungsvariante des Batteriegehäuses 8 in einer Unteransicht. Im Gegensatz zur ersten Ausführungsvariante ist die Temperierplatte 1 im hier gezeigten zweiten Ausführungsbeispiel außenseitig mit dem Boden 9 der Batteriewanne 13 verbunden. Dies ist auch in der Figur 4a gezeigt, welche das Batteriegehäuse 8 im Schnitt B-B der Figur 3 zeigt. Die außenseitige Anbringung der Temperierplatte 1 an dem Boden 9 hat den Vorteil, dass der Innenraum 11 durch die Temperierplatte 1 nicht beschränkt wird und somit mehr Platz für die Aufnahme bzw. Abdeckung der Batteriemodule zur Verfügung steht. Zudem kann ein völlig ebener Boden 9 für optimale Batteriekontaktierung und somit beste Wärmeleitung, vorzugsweise unter Zwischenschaltung von Wärmeleitfolien, -schichten oder -matten, bereitgestellt werden. Aufgrund der erfindungsgemäßen Ausbildung der Temperierplatte 1 ist dennoch kein zusätzlicher Unterbodenschutz notwendig, da die Temperierplatte 1 sehr widerstandsfähig gegenüber Belastungen ist.

Der Figur 3 ist ferner zu entnehmen, dass das Batteriegehäuse 8 zwei Verstärkungsprofile 14 aufweist, welche außerhalb des Innenraums 11 an gegenüberliegenden Seitenwänden 10, in diesem Fall an den gegenüberliegenden Längsseiten, angeordnet sind. Die Verstärkungsprofile 14 können optional in Kraftfahrzeugvertikalrichtung Z vom Kraftfahrzeug aus gesehen nach unten über die Temperierkanäle 12 über. Durch die Verstärkungsprofile 14 kann die Stabilität des Batteriegehäuses 8 erhöht werden. Zudem kann ein besseres Crashverhalten erreicht werden. Die Verstärkungsprofile 14 dienen auch der Anbindung des Batteriegehäuses 13 an Fahrzeugstrukturen wie Schweller oder Leiterrahmen. Wenn die Verstärkungsprofile 14 nach unten überstehen, kann eine Abgleitfunktion bzw. eine Aufsetzschutzfunktion erfüllt werden und damit ein Unterfahrschutz für die Temperierkanalstruktur 2 selbst bereitgestellt werden.

Die Temperierplatte 1 ist entlang ihrer Außenkanten 15 umlaufend mit dem Boden 9 der Batteriewanne 13 verschweißt, insbesondere mittels einer Kehlnaht laserverschweißt.

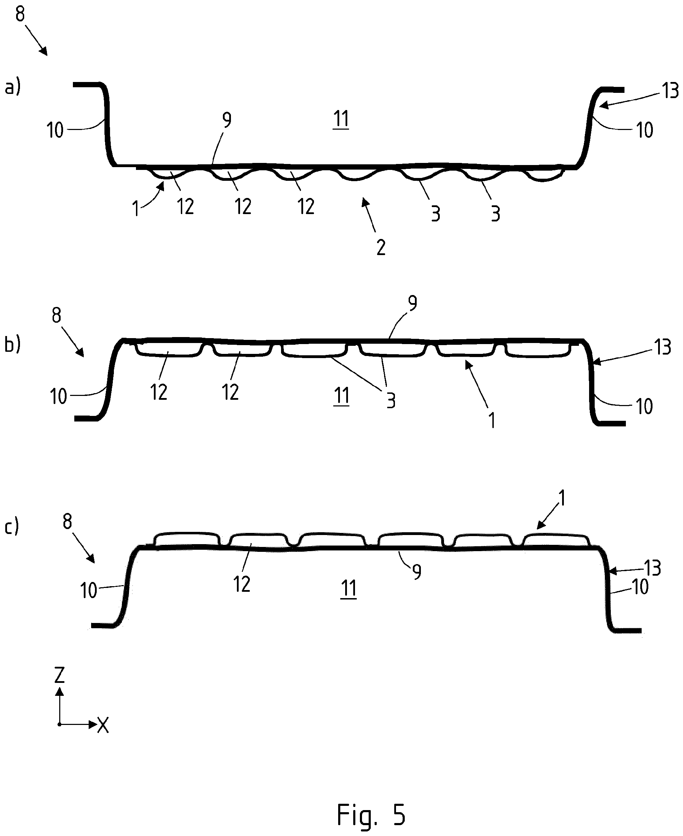

Die Figur 5 zeigt mögliche Ausführungsvarianten des Batteriegehäuses 8, jeweils in einer Längsschnittdarstellung. Die in der Figur 5a gezeigte Ausführungsvariante entspricht vom grundsätzlichen Aufbau der in der Figur 3 bzw. Figur 4a gezeigten zweiten Ausführungsvariante, in der die Temperierplatte 1 außenseitig, mithin außerhalb des Innenraums 11, mit dem Boden 9 der Temperierplatte 1 verbunden ist. Das in der Figur 5 dargestellte Koordinatensystem bezieht sich auf das Kraftfahrzeug, wobei die Z-Achse, die Kraftfahrzeugvertikalachse, und die X-Achse die Kraftfahrzeuglängsachse darstellt. Die Temperierplatte 1 ist somit zwischen dem Untergrund und der Batteriewanne 13 angeordnet und dient somit zugleich als Unterfahrschutz für die Batteriewanne 13 bzw. das Kraftfahrzeug. Die nunmehr im Querschnitt wellenförmig ausgeformte Temperierkanalstruktur 2 mit deutlich mehr einzelnen Temperierkanälen 12 bietet gegenüber der Ausgestaltungsvariante gemäß Figur 2 und Figur 4a eine nochmal erhöhte Steifigkeit.

Figur 5b zeigt, dass die Batteriewanne 13 auch als Haube fungieren kann. In diesem Fall ist die Batteriewanne 13 im Vergleich zu den in Figur 5a und b gezeigten Ausführungsvarianten so mit dem Kraftfahr-

zeug verbunden, dass die Öffnung des Innenraums 11 nach unten, mithin weg vom Kraftfahrzeug zeigt. In dem hier gezeigten Ausführungsbeispiel ist die Temperierplatte 1 wiederum vom Innenraum 11 aus mit dem Boden 9 der Batteriewanne 13 gefügt. Die als Haube ausgebildete Batteriewanne 13 kann durch einen in Einbaulage darunter anordenbaren Deckel fluiddicht geschlossen werden. Die Batterien stehen an ihrer Oberseite im Kontakt mit der Temperierplatte 1, beispielsweise über ein zwischengeschaltetes Wärmeleitmaterial.

In der Figur 5c ist dargestellt, dass die Temperierplatte 1 bei der als Haube ausgebildeten Batteriewanne 13 auch außenseitig mit dem Boden 9 der Batteriewanne 13 gefügt sein kann. Dies hat den Vorteil, dass die Fluidanschlüsse außerhalb der Batteriewanne 13 liegen, sodass im Falle einer Undichtigkeit das Temperierfluid nicht in den Innenraum 11 der Batteriewanne 13 gelangt.

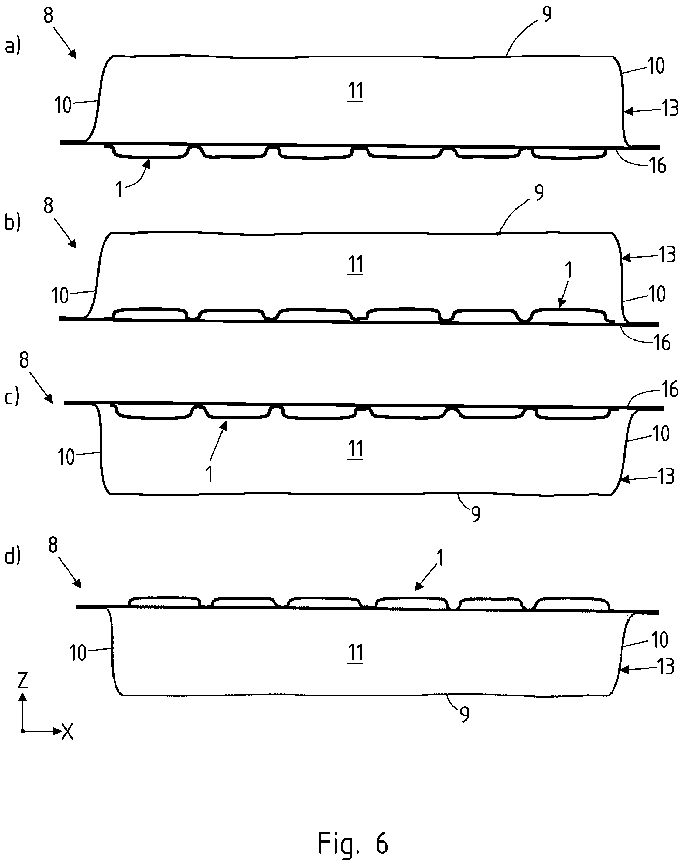

Die Figur 6 zeigt weitere mögliche Ausführungsvarianten des Batteriegehäuses 8. In den hier gezeigten Ausführungsbeispielen umfasst das Batteriegehäuse 8 jeweils einen Deckel 16, der gegenüberliegend zum Boden 9 angeordnet ist und den Innenraum 11 der Batteriewanne 13 abdeckt. In den hier gezeigten Ausführungsbeispielen sind die Temperierplatten 1 nicht mit dem Boden 9 der Batteriewanne 13 verbunden, sondern mit den jeweiligen Deckeln 16. Dies erhöht die Gestaltungsfreiheit bei der Auslegung des Batteriegehäuses 8 für das jeweilige Kraftfahrzeug.

In der Figur 6a ist die Batteriewanne 13 als Haube ausgebildet, mithin schließt der Deckel 16 den Innenraum 11 unterseitig auf der vom Kraftfahrzeug weg orientierten Seite der Batteriewanne 13 ab. Die Temperierplatte 1 ist außenseitig mit dem Deckel 16 verbunden, so dass die Temperierplatte 1 nicht im Innenraum 11 des Batteriegehäuses angeordnet ist.

Alternativ kann die Temperierplatte 1, wie in Figur 6b gezeigt, auch innenseitig mit dem Deckel 16 verbunden sein. In diesem Fall ist die Temperierplatte 1 im Innenraum 11 des Batteriegehäuses 8 angeordnet. Die Vorteile entsprechen jenen der ersten Ausführungsvariante gemäß Figur 4b.

Figur 6c zeigt ein weiteres Ausführungsbeispiel, in dem die Batteriewanne 13 als Wanne ausgebildet ist. Mithin verschließt der Deckel 16 den Innenraum 11 der Batteriewanne 13 an der Oberseite, also an der zum Kraftfahrzeug weisenden Seite der Batteriewanne 13. In diesem Fall ist die Temperierplatte 1 innenseitig mit dem Deckel 16 verbunden, so dass die Temperierplatte 1 innerhalb des Innenraums 11 des Batteriegehäuses 8 angeordnet ist. Es ist erfindungsgemäß möglich, dass der Deckel 16 integraler Teil eines Karosserie-Bodenblechs ist, mithin eine separate Deckel-Blechlage für das Batteriegehäuse 13 entfällt. In diesem Fall würde der Deckel 16 in der Bildebene links und rechts weiterlaufen und beispielsweise oberhalb in Kraftfahrzeugrichtung direkte Anbindungspunkte zur Kopplung mit der Kraftfahrzeugstruktur, beispielsweise einem Sitzquerträger bereitstellen. Insbesondere können diese Anbindungspunkte zwischen zwei benachbarten Kanalprofilierungen 3 und somit in doppellagigen ebenen Abschnitten (Deckel-Blechlage und Temperierplatten-Blechlage) angeordnet sein.

Figur 6d ist zu entnehmen, dass die Temperierplatte 1 bei einer Ausbildung des Batteriegehäuses 13 als Wanne auch außenseitig, mithin außerhalb des Innenraums 11 mit dem Deckel 16 gefügt sein kann. Im Falle einer Undichtigkeit ist so sichergestellt, dass das Temperierfluid nicht in den Innenraum 11 der Batteriewanne 13 eindringen kann. Zudem vergrößert sich die maximal mögliche plane Kontaktfläche zu den Batterien im Vergleich zu innenseitig angeordneten Temperierplatten 1.

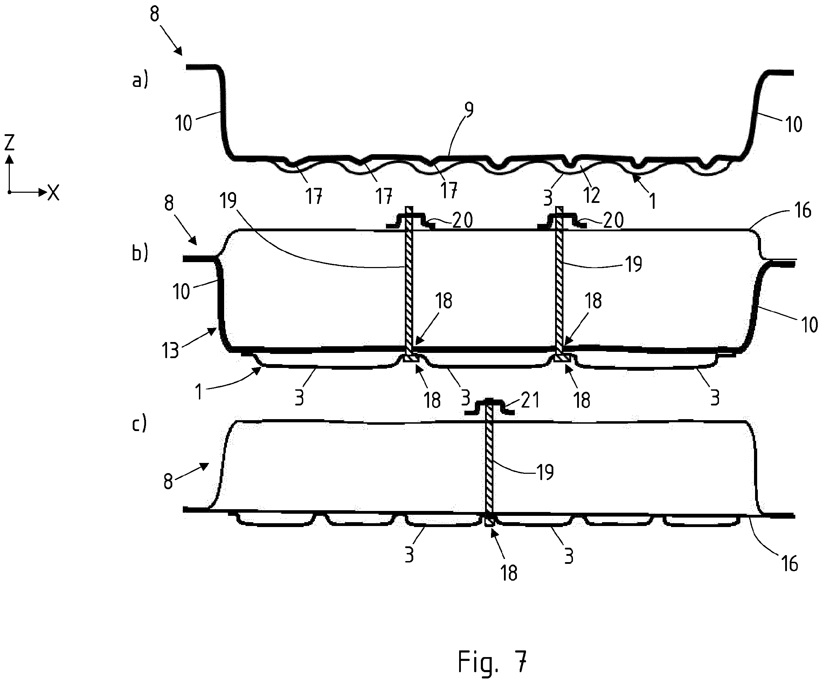

Die Figur 7 zeigt weitere Ausführungsbeispiele des erfindungsgemäßen Batteriegehäuses 8 jeweils im Längsschnitt.

Der Figur 7a ist zu entnehmen, dass der Boden 9 der Batteriewanne 13 eine Vielzahl lokaler Ausbuchtungen 17 aufweisen kann, welche in die Temperierkanalprofilierungen 3 der Temperierplatte 1 hineinragen und dort lokale Turbulatoren ausbilden, welche die Strömung innerhalb der zwischen dem Boden 9 und der Temperierplatte 1 ausgebildeten Strömungskanälen 12 beeinflussen können.

Die Figur 7b zeigt, dass sowohl die Temperierplatte 1 als auch der Boden 9 der Batteriewanne 13 Durchgangsöffnungen 18 aufweisen können. Die Durchgangsöffnungen 18 sind jeweils zwischen benachbart verlaufenden Temperierkanalprofilierungen 3 bzw. zwischen Abschnitten derselben angeordnet. Dies hat den Vorteil, dass die Durchgangsöffnung 18 die Fluidkanäle 12 nicht beeinflussen. Durch die Durchgangsöffnungen 18 erstrecken sich jeweils Befestigungsmittel 19, welche das Batteriegehäuse 8 beispielsweise mit Sitzquerträgern 20 des Kraftfahrzeugs koppeln.

Die Figur 7c zeigt eine alternative Kopplungsmethode. Hier ist die Batteriewanne 13 als Haube ausgebildet, wobei die Temperierplatte 1, der Deckel 16, als auch der Boden 9 jeweils eine Durchgangsöffnung 18 aufweisen. Auch in diesem Ausführungsbeispiel befindet sich die Durchgangsöffnung 18 der Temperierplatte 1 zwischen zwei benachbarten Temperierkanalprofilierungen 3 bzw. zwischen Abschnitten derselben.

Das Batteriegehäuse 8 ist wiederum mittels einem sich durch die Durchgangsöffnung 18 erstreckenden Befestigungsmittels 19 mit einem Querträger 21 des Kraftfahrzeugs verbunden.

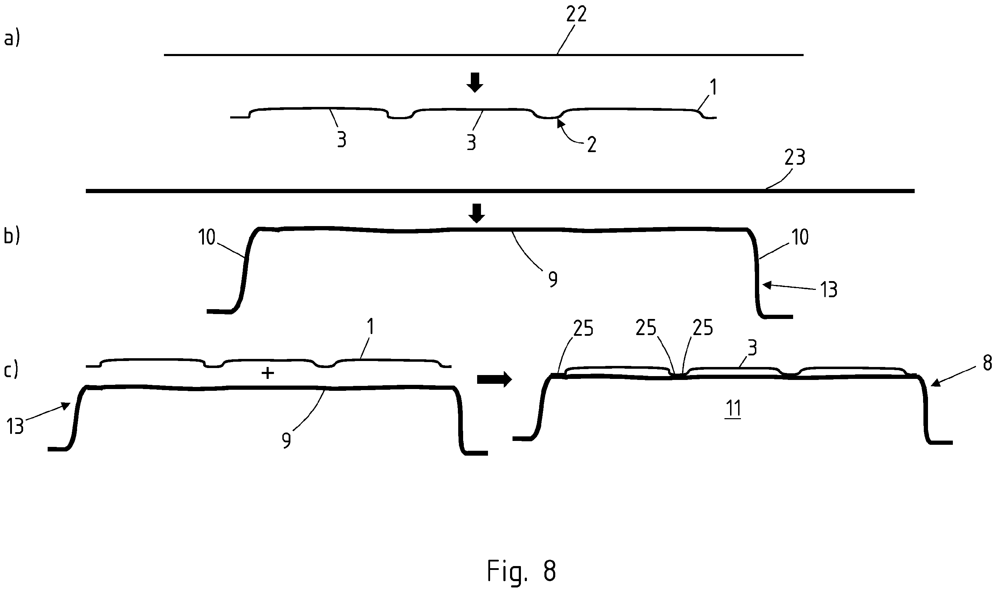

Die Figur 8 zeigt das erfindungsgemäße Verfahren zur Herstellung eines Batteriegehäuses 8. Gemäß Figur 8a wird zunächst ein MnB-Stahlblech 22 bereitgestellt, welches zumindest einseitig mit einer Vorbeschichtung versehen wurde, welche neben Al und unvermeidbaren Verunreinigungen 5,9 bis 12,9 Gew.-% Si sowie 0,5 bis 4,0 Gew.-% Fe aufweist. Das MnB-Stahlblech 22 wird zu einer Temperierplatte 1 mit einer Temperierkanalstruktur 2, die wenigstens eine Temperierkanalprofilierung 3 aufweist, warmgeformt.

Parallel, vorgelagert oder nachgelagert zu dem in Figur 8a gezeigtem Verfahrensschritt wird in einem zweiten Verfahrensschritt gemäß Figur 8b ein zweites Stahlblech 23 bereitgestellt, bei dem es sich ebenfalls um ein MnB-Stahlblech handeln kann. Auch das zweite Stahlblech 23 kann mit einer Al-Si- oder einer Zn-Vorbeschichtung versehen werden. Anschließend wird das zweite Stahlblech 23 mittels Kaltformen zu einer Batteriewanne 13 mit einem Boden 9 und vier Seitenwänden 10 umgeformt. Alternativ kann das zweite Stahlblech 23 auch zu einem Boden 9 und vier Seitenwänden 10 zugeschnitten werden, welche anschließend miteinander zu einer Batteriewanne 13 gefügt werden.

In dem letzten Verfahrensschritt, welcher in der Figur 8c gezeigt ist, wird die Temperierplatte 1 mit dem Boden 9 der Batteriewanne 13 fluiddicht verschweißt, insbesondere mittels Laserschweißen, um so das Batteriegehäuse 8 zu erhalten.

In dem in Figur 8 gezeigten Verfahrensablauf wird die Temperierplatte 1 außenseitig mit der Batteriewanne 13 verschweißt. Abhängig von der Anzahl der auf der Temperierplatte 1 angeordneten Temperierkanalprofile 3 und dem sich daraus ergebenden Abstand zwischen den Temperierkanalprofile 3 können zwischen den Temperierkanalprofilen 3 eine Schweißnaht 25 oder, wie in diesem Ausführungsbeispiel gezeigt, zwei Schweißnähte 25 ausgebildet werden.

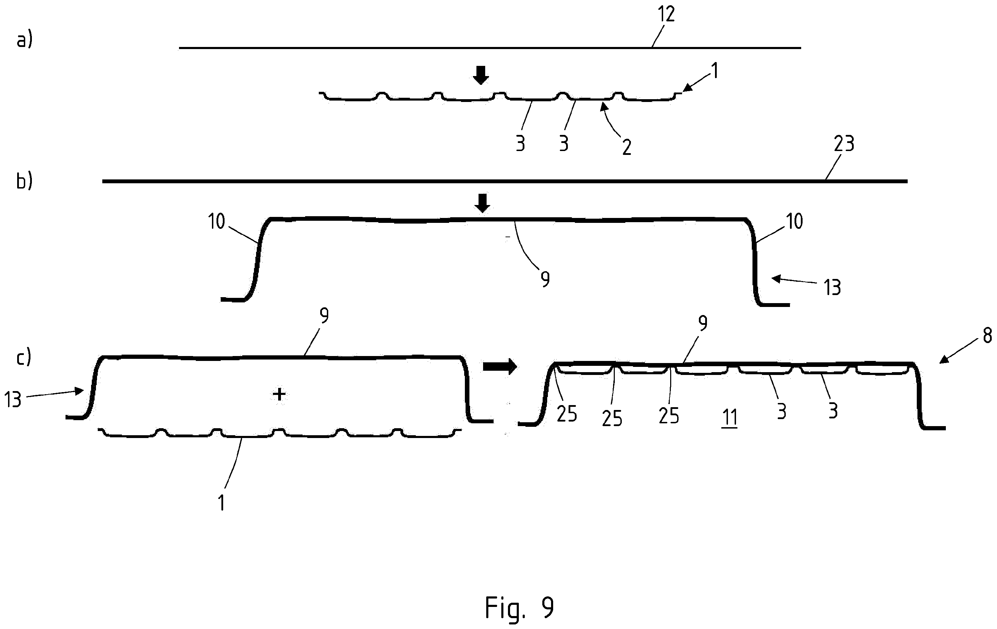

Die Figur 9 zeigt ein alternatives erfindungsgemäßes Herstellungsverfahren eines Batteriegehäuses 8. Die in den Figuren 9a und 9b gezeigten Verfahrensschritte entsprechen den Verfahrensschritten gemäß Figur 8a und 8b. Im letzten Verfahrensschritt, welcher in der Figur 9c dargestellt ist, wird die Temperierplatte 1 innenseitig mit dem Boden 9 der Batteriewanne 13 verschweißt. Das bedeutet, dass die Temperierplatte 1 im Innenraum 11 des Batteriegehäuses 8 angeordnet ist. Aufgrund des geringen Abstands zwischen den Temperiekanalprofilierungen 3, ist in diesem Ausführungsbeispiel lediglich eine Schweißnaht 25 zwischen benachbarten Temperierkanalprofilierungen 3 ausgebildet.

**Bezugszeichen:**

1 - Temperierplatte
2 - Temperierkanalstruktur
3 - Temperierkanalprofilierung
4 - Einlassstutzen
5 - Auslassstutzen
6 - Biegung v. 3
7 - Sicke
8 - Batteriegehäuse
9 - Boden
10 - Seitenwände
11 - Innenraum
12 - Temperierkanal
13 - Batteriewanne
14 - Verstärkungsprofile
15 - Außenkante
16 - Deckel
17 - Ausbuchtung
18 - Durchgangsöffnung
19 - Befestigungsmittel
20 - Sitzquerträger
21 - Querträger
22 - MnB-Stahlblech
23 - zweites Stahlblech
24 - Schweißnaht
25 - Schweißnaht

H - Höhe v. 3
HS - Höhe v. 7
X - Kraftfahrzeuglängsrichtung
Z - Kraftfahrzeugvertikalrichtung

**Patentansprüche**

1. Temperierplatte (1) zur Verbindung mit einem Batteriegehäuse (8) eines Kraftfahrzeugs, aufweisend eine Temperierkanalstruktur (2) mit wenigstens einer Temperierkanalprofilierung (3), wobei die Temperierplatte (1) aus einem Mangan-Bor-Stahlblech (22) hergestellt und warmgeformt ist, wobei die Temperierplatte (1) außenseitig eine Aluminium-Legierungsschicht aufweist, wobei die Temperierplatte (1) eine Zugfestigkeit Rm > 1.000 MPa und ein Martensitgefüge aus wenigstens 50 Vol.-% Martensit aufweist.

2. Temperierplatte (1) nach Anspruch 1, **dadurch gekennzeichnet, dass** vor dem Warmformen eine Vorbeschichtung auf das Mangan-Bor-Stahlblech (22) aufgebracht ist und die Vorbeschichtung neben Aluminium und unvermeidbaren Verunreinigungen folgende Zusammensetzung aufweist:

   - 5,9 bis 12,9 Gew.-% Si,
   - 0,5 bis 4,0 Gew.-% Fe,

   wobei aus der Vorbeschichtung durch das Warmformen die Aluminium-Legierungsschicht ausgebildet ist.

3. Temperierplatte (1) nach Anspruch 1 oder 2, **dadurch gekennzeichnet, dass** das Mangan-Bor-Stahlblech (22) zumindest die folgenden Bestandteile aufweist:

   - 0,19 bis 0,25 Gew.-% C, 1,1 bis 1,4 Gew.-% Mn, 0,004 bis 0,1 Gew.-% B, oder
   - 0,2 bis 0,23 Gew.-% C, 1,1 bis 1,4 Gew.-% Mn, 0,004 bis 0,1 Gew.-% B, oder
   - 0,31 bis 0,37 Gew.-% C, 1,1 bis 1,5 Gew.-% Mn, 0,001 bis 0,004 Gew.-% B, oder
   - 0,33 bis 0,35 Gew.-% C, 1,1 bis 1,5 Gew.-%

Mn, 0,001 bis 0,004 Gew.-% B, oder
• 0,08 bis 0,13 Gew.-% C, 0,8bis 1,9 Gew.-% Mn, 0,001 bis 0,003 Gew.-% B, oder
• 0,09 bis 0,12 Gew.-% C, 1,2 bis 1,8 Gew.-% Mn, 0,0007 bis 0,002 Gew.-% B.

**4.** Temperierplatte (1) nach einem der Ansprüche 1 bis 3, **dadurch gekennzeichnet, dass** die Temperierkanalprofilierung (3) einen mäanderförmigen und/oder schlangenlinienförmigen und/oder mehrfach verzweigenden Verlauf aufweist.

**5.** Temperierplatte (1) nach einem der Ansprüche 1 bis 4, **dadurch gekennzeichnet, dass** die Temperierplatte (1) eine Blechstärke von 0,5 bis 2,0 mm, insbesondere von 0,7 bis 1,5 mm aufweist.

**6.** Temperierplatte (1) nach einem der Ansprüche 1 bis 5, **dadurch gekennzeichnet, dass** die Aluminium-Legierungsschicht eine Schichtdicke von 7 μm bis 50 μm, bevorzugt von 10 μm bis 44 μm, besonders bevorzugt von 12 bis 40 μm aufweist.

**7.** Temperierplatte (1) nach einem der Ansprüche 1 bis 6, **dadurch gekennzeichnet, dass** wenigstens eine Sicke (7) in der Temperierkanalprofilierung (3) angeordnet ist, wobei die wenigstens eine Sicke (7) bevorzugt in einer Biegung (6) der Temperierkanalprofilierung (3) angeordnet ist.

**8.** Temperierplatte (1) nach einem der Ansprüche 1 bis 7, **dadurch gekennzeichnet, dass** zumindest die Temperierkanalprofilierung (3) eine Zugfestigkeit Rm > 1.300 MPa aufweist, wobei die Temperierplatte (1) ein Martensitgefügte aus wenigstens 80 Vol.-% Martensit aufweist und pressgehärtet ist.

**9.** Temperierplatte (1) nach einem der Ansprüche 1 bis 8, **dadurch gekennzeichnet, dass** die Temperierkanalprofilierung (3) eine Höhe (H) von 2 mm bis 15 mm, bevorzugt von 3 mm bis 12 mm, besonders bevorzugt von 4 mm bis 10 mm aufweist.

**10.** Temperierplatte (1) nach einem der Ansprüche 1 bis 9, **dadurch gekennzeichnet, dass** die Temperierplatte (1) wenigstens eine Durchgangsöffnung (18) aufweist, wobei die Durchgangsöffnung (18) bevorzugt zwischen zwei benachbart verlaufenden Temperierkanalprofilierungen (3) angeordnet ist.

**11.** Batteriegehäuse (8) für ein Kraftfahrzeug, aufweisend einen Boden (9) und wenigstens vier mit dem Boden (9) verbundene Seitenwände (10), welche einen Innenraum (11) zur Aufnahme oder Abdeckung von Batterien ausbilden, wobei eine Temperierplatte (1) gemäß einem der Ansprüche 1 bis 10 fluiddicht mittels Laserschweißen oder Kleben

a) mit dem Boden (9) verbunden ist, dergestalt, dass zwischen den Temperierkanalprofilierungen (3) der Temperierkanalstruktur (2) und dem Boden (9) Temperierkanäle (12) ausgebildet sind,
oder
b) mit einem Deckel (16) des Batteriegehäuses (8) verbunden ist, dergestalt, dass zwischen den Temperierkanalprofilierungen (3) der Temperierkanalstruktur (2) und dem Deckel (16) Temperierkanäle (12) ausgebildet sind, wobei der Deckel (16) gegenüberliegend zum Boden (9) angeordnet ist und den Innenraum (11) abschließt.

**12.** Batteriegehäuse (8) nach Anspruch 11, **dadurch gekennzeichnet, dass** die Temperierplatte (1) auf der zum Innenraum (11) abgewandten Seite des Deckels (16) oder des Bodens (9) angeordnet ist.

**13.** Batteriegehäuse (8) nach Anspruch 11 oder 12, **dadurch gekennzeichnet, dass** der Boden (9) und die Seitenwände (10) einstückig geformt oder miteinander gefügt sind.

**14.** Batteriegehäuse (8) nach einem der Ansprüche 11 bis 13, **dadurch gekennzeichnet, dass** der Boden (9) und/oder die Seitenwände (10) aus einem vorbeschichteten Stahlblech hergestellt sind, wobei die Vorbeschichtung eine Al-Si-Vorbeschichtung oder eine Zn- Vorbeschichtung ist.

**15.** Batteriegehäuse (8) nach einem der Ansprüche 11 bis 14, **dadurch gekennzeichnet, dass** die Temperierplatte (1) zwischen benachbart verlaufenden Temperierkanalprofilierungen (3) mit dem Boden (9) oder dem Deckel (16) verschweißt ist, insbesondere mittels Stichschweißung oder Durchschweißung.

**16.** Batteriegehäuse (8) nach einem der Ansprüche 11 bis 15, **dadurch gekennzeichnet, dass** Verstärkungsprofile (14) außerhalb des Innenraums (11) an gegenüberliegenden Seitenwänden (10) angeordnet sind.

**17.** Batteriegehäuse (8) nach einem der Ansprüche 11 bis 16, **dadurch gekennzeichnet, dass** die Temperierplatte (1) entlang ihrer Außenkanten (15) umlaufend mit dem Boden (9) oder dem Deckel (16) abgedichtet, bevorzugt verschweißt ist, besonders bevorzugt mittels einer Kehlnaht laserverschweißt ist.

**18.** Verfahren zur Herstellung eines Batteriegehäuses (8) für ein Kraftfahrzeug, insbesondere eines Batteriegehäuses (8) gemäß einem der Ansprüche 11 bis 17, mit den folgenden Verfahrensschritten:

• Bereitstellen eines MnB-Stahlblechs (22) mit einer Vorbeschichtung auf wenigstens einer Seite des MnB-Stahlblechs (22), wobei die Vorbeschichtung neben Aluminium und unvermeidbaren Verunreinigungen folgende Zusammensetzung aufweist:

- 5,9 bis 12,9 Gew.-% Si,
- 0,5 bis 4,0 Gew.-% Fe,

Warmformen des MnB-Stahlblechs (22) zu einer Temperierplatte (1) mit einer Temperierkanalstruktur (2), die wenigstens eine Temperierkanalprofilierung (3) aufweist,
• Bereitstellen wenigstens eines zweiten Stahlblechs (23) und

- Umformen des zweiten Stahlblechs zu einer Batteriewanne (13) mit einem Boden (9) und wenigstens vier Seitenwänden (10), oder
- Zuschnitt und insbesondere Umformen des wenigstens zweiten Stahlblechs (23) zu einem Boden (9) und vier Seitenwänden (10) und anschließendes Fügen zu einer Batteriewanne (13),

• Verschweißen oder Kleben der Temperierplatte (1) mit dem Boden (9) der Batteriewanne (13) um das Batteriegehäuse (8) zu erhalten, oder
• Bereitstellen eines Deckels (16) aus Stahl, Verschweißen oder Kleben der Temperierplatte (1) mit dem Deckel (16) und Anordnung des Deckels (16) auf der Batteriewanne (13) um das Batteriegehäuse (8) zu erhalten.

**Geänderte Patentansprüche gemäss Regel 137(2) EPÜ.**

1. Temperierplatte (1) zur Verbindung mit einem Batteriegehäuse (8) eines Kraftfahrzeugs, aufweisend eine Temperierkanalstruktur (2) mit wenigstens einer Temperierkanalprofilierung (3), wobei die Temperierplatte (1) aus einem Mangan-Bor-Stahlblech (22) hergestellt und warmgeformt ist, wobei die Temperierplatte (1) außenseitig eine Aluminium-Legierungsschicht aufweist, wobei die Temperierplatte (1) eine Zugfestigkeit Rm > 1.000 MPa und ein Martensitgefüge aus wenigstens 50 Vol.-% Martensit aufweist, wobei die Aluminium-Legierungsschicht neben Aluminium und unvermeidbaren Verunreinigungen folgende Zusammensetzung aufweist:

   • 5,9 bis 12,9 Gew.-% Si,
   • 0,5 bis 4,0 Gew.-% Fe

2. Temperierplatte (1) nach Anspruch 1, **dadurch gekennzeichnet, dass** das Mangan-Bor-Stahlblech (22) zumindest die folgenden Bestandteile aufweist:

   • 0,19 bis 0,25 Gew.-% C, 1,1 bis 1,4 Gew.-% Mn, 0,004 bis 0,1 Gew.-% B, oder
   • 0,2 bis 0,23 Gew.-% C, 1,1 bis 1,4 Gew.-% Mn, 0,004 bis 0,1 Gew.-% B, oder
   • 0,31 bis 0,37 Gew.-% C, 1,1 bis 1,5 Gew.-% Mn, 0,001 bis 0,004 Gew.-% B, oder
   • 0,33 bis 0,35 Gew.-% C, 1,1 bis 1,5 Gew.-% Mn, 0,001 bis 0,004 Gew.-% B, oder
   • 0,08 bis 0,13 Gew.-% C, 0,8bis 1,9 Gew.-% Mn, 0,001 bis 0,003 Gew.-% B, oder
   • 0,09 bis 0,12 Gew.-% C, 1,2 bis 1,8 Gew.-% Mn, 0,0007 bis 0,002 Gew.-% B.

3. Temperierplatte (1) nach Anspruch 1 oder 2, **dadurch gekennzeichnet, dass** die Temperierkanalprofilierung (3) einen mäanderförmigen und/oder schlangenlinienförmigen und/oder mehrfach verzweigenden Verlauf aufweist.

4. Temperierplatte (1) nach einem der Ansprüche 1 bis 3, **dadurch gekennzeichnet, dass** die Temperierplatte (1) eine Blechstärke von 0,5 bis 2,0 mm, insbesondere von 0,7 bis 1,5 mm aufweist.

5. Temperierplatte (1) nach einem der Ansprüche 1 bis 4, **dadurch gekennzeichnet, dass** die Aluminium-Legierungsschicht eine Schichtdicke von 7 µm bis 50 µm, bevorzugt von 10 µm bis 44 µm, besonders bevorzugt von 12 bis 40 µm aufweist.

6. Temperierplatte (1) nach einem der Ansprüche 1 bis 5, **dadurch gekennzeichnet, dass** wenigstens eine Sicke (7) in der Temperierkanalprofilierung (3) angeordnet ist, wobei die wenigstens eine Sicke (7) bevorzugt in einer Biegung (6) der Temperierkanalprofilierung (3) angeordnet ist.

7. Temperierplatte (1) nach einem der Ansprüche 1 bis 6, **dadurch gekennzeichnet, dass** zumindest die Temperierkanalprofilierung (3) eine Zugfestigkeit Rm > 1.300 MPa aufweist, wobei die Temperierplatte (1) ein Martensitgefügte aus wenigstens 80 Vol.-% Martensit aufweist und pressgehärtet ist.

8. Temperierplatte (1) nach einem der Ansprüche 1 bis 7, **dadurch gekennzeichnet, dass** die Temperierkanalprofilierung (3) eine Höhe (H) von 2 mm bis 15 mm, bevorzugt von 3 mm bis 12 mm, besonders bevorzugt von 4 mm bis 10 mm aufweist.

9. Temperierplatte (1) nach einem der Ansprüche 1 bis 8, **dadurch gekennzeichnet, dass** die Temperierplatte (1) wenigstens eine Durchgangsöffnung (18) aufweist, wobei die Durchgangsöffnung (18) bevorzugt zwischen zwei benachbart verlaufenden Tem-

perierkanalprofilierungen (3) angeordnet ist.

**10.** Batteriegehäuse (8) für ein Kraftfahrzeug, aufweisend einen Boden (9) und wenigstens vier mit dem Boden (9) verbundene Seitenwände (10), welche einen Innenraum (11) zur Aufnahme oder Abdeckung von Batterien ausbilden, wobei eine Temperierplatte (1) gemäß einem der Ansprüche 1 bis 9 fluiddicht mittels Laserschweißen oder Kleben

a) mit dem Boden (9) verbunden ist, dergestalt, dass zwischen den Temperierkanalprofilierungen (3) der Temperierkanalstruktur (2) und dem Boden (9) Temperierkanäle (12) ausgebildet sind,
oder
b) mit einem Deckel (16) des Batteriegehäuses (8) verbunden ist, dergestalt, dass zwischen den Temperierkanalprofilierungen (3) der Temperierkanalstruktur (2) und dem Deckel (16) Temperierkanäle (12) ausgebildet sind, wobei der Deckel (16) gegenüberliegend zum Boden (9) angeordnet ist und den Innenraum (11) abschließt.

**11.** Batteriegehäuse (8) nach Anspruch 10, **dadurch gekennzeichnet, dass** die Temperierplatte (1) auf der zum Innenraum (11) abgewandten Seite des Deckels (16) oder des Bodens (9) angeordnet ist.

**12.** Batteriegehäuse (8) nach Anspruch 10 oder 11, **dadurch gekennzeichnet, dass** der Boden (9) und die Seitenwände (10) einstückig geformt oder miteinander gefügt sind.

**13.** Batteriegehäuse (8) nach einem der Ansprüche 10 bis 12, **dadurch gekennzeichnet, dass** der Boden (9) und/oder die Seitenwände (10) aus einem vorbeschichteten Stahlblech hergestellt sind, wobei die Vorbeschichtung eine Al-Si-Vorbeschichtung oder eine Zn- Vorbeschichtung ist.

**14.** Batteriegehäuse (8) nach einem der Ansprüche 10 bis 13, **dadurch gekennzeichnet, dass** die Temperierplatte (1) zwischen benachbart verlaufenden Temperierkanalprofilierungen (3) mit dem Boden (9) oder dem Deckel (16) verschweißt ist, insbesondere mittels Stichschweißung oder Durchschweißung.

**15.** Batteriegehäuse (8) nach einem der Ansprüche 10 bis 14, **dadurch gekennzeichnet, dass** Verstärkungsprofile (14) außerhalb des Innenraums (11) an gegenüberliegenden Seitenwänden (10) angeordnet sind.

**16.** Batteriegehäuse (8) nach einem der Ansprüche 10 bis 15, **dadurch gekennzeichnet, dass** die Temperierplatte (1) entlang ihrer Außenkanten (15) umlaufend mit dem Boden (9) oder dem Deckel (16) abgedichtet, bevorzugt verschweißt ist, besonders bevorzugt mittels einer Kehlnaht laserverschweißt ist.

**17.** Verfahren zur Herstellung eines Batteriegehäuses (8) für ein Kraftfahrzeug gemäß einem der Ansprüche 11 bis 16, mit den folgenden Verfahrensschritten:

• Bereitstellen eines MnB-Stahlblechs (22) mit einer Vorbeschichtung auf wenigstens einer Seite des MnB-Stahlblechs (22), wobei die Vorbeschichtung neben Aluminium und unvermeidbaren Verunreinigungen folgende Zusammensetzung aufweist:

- 5,9 bis 12,9 Gew.-% Si,
- 0,5 bis 4,0 Gew.-% Fe,

Warmformen des MnB-Stahlblechs (22) zu einer Temperierplatte (1) mit einer Temperierkanalstruktur (2), die wenigstens eine Temperierkanalprofilierung (3) aufweist,
• Bereitstellen wenigstens eines zweiten Stahlblechs (23) und

- Umformen des zweiten Stahlblechs zu einer Batteriewanne (13) mit einem Boden (9) und wenigstens vier Seitenwänden (10), oder
- Zuschnitt und insbesondere Umformen des wenigstens zweiten Stahlblechs (23) zu einem Boden (9) und vier Seitenwänden (10) und anschließendes Fügen zu einer Batteriewanne (13),

• Verschweißen oder Kleben der Temperierplatte (1) mit dem Boden (9) der Batteriewanne (13) um das Batteriegehäuse (8) zu erhalten,
oder
• Bereitstellen eines Deckels (16) aus Stahl, Verschweißen oder Kleben der Temperierplatte (1) mit dem Deckel (16) und Anordnung des Deckels (16) auf der Batteriewanne (13) um das Batteriegehäuse (8) zu erhalten.

1
2
3
3
3
3
4
5
6
6
6
7
7
7
7
H
HS

Fig. 1

10
A
13
9
10
3
24
11
10
10
3
A
1
8

Fig. 2

1
10
B
13
14
14
B
10
9
15
8
Y
Z
X

Fig. 3

a)
b)
8
1
3
9
10
11
12
13
B-B
A-A
Fig. 4

8
a)
10
9
11
13
10
1
12
12
12
3
3
2
8
b)
9
13
10
12
12
11
3
1
10
c)
8
1
13
10
12
9
11
10
Z
X

Fig. 5

a)
8
9
10
11
10
13
16
1
b)
8
9
11
13
1
10
10
16
c)
8
16
10
1
11
10
13
9
d)
8
1
10
11
10
13
Z
X
9

Fig. 6

Z
X

Fig. 7

a)
22
1
3
3
2
23
b)
10
10
9
13
c)
1
+
13
9
25
25
25
3
8
11

Fig. 8

a)
12
1
3
3
2
b)
23
10
10
9
13
c)
9
13
+
1
9
8
25
25
25
11
3
3

Fig. 9

Europäisches
Patentamt
European
Patent Office
Office européen
des brevets

# EUROPÄISCHER RECHERCHENBERICHT

Nummer der Anmeldung
EP 25 15 7904

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2024/154208 A1 (MIYAKE KYOHEI [JP] ET AL) 9. Mai 2024 (2024-05-09)<br>* Absätze [0002], [0032], [0037], [0046], [0047], [0074]; Ansprüche 1-8 * | 1-18 | INV.<br>C23C30/00<br>B23K26/00<br>B32B15/01<br>B60L50/64<br>C21D8/02<br>H01M10/613<br>H01M10/625<br>H01M10/6554<br>H01M10/6556<br>H01M50/249<br>C22C21/02<br>C22C38/04<br>H01M50/222<br>H01M50/244 |
| Y | DE 10 2019 212590 A1 (THYSSENKRUPP STEEL EUROPE AG [DE])<br>25. Februar 2021 (2021-02-25)<br>* Absätze [0023], [0036], [0046], [0048]; Ansprüche 1-15 * | 1-18 | |
| Y | EP 4 494 908 A1 (BENTELER AUTOMOBILTECHNIK GMBH [DE]) 22. Januar 2025 (2025-01-22)<br>* Absätze [0037] - [0045], [0059] * | 1-18 | |
| A | WO 2021/009256 A1 (MUHR & BENDER KG [DE]) 21. Januar 2021 (2021-01-21)<br>* Ansprüche 1-15 * | 1-18 | |

RECHERCHIERTE SACHGEBIETE (IPC)

C23C
B23K
C21D
B60L
C22C
H01M
B32B

Der vorliegende Recherchenbericht wurde für alle Patentansprüche erstellt

1

| Recherchenort | Abschlußdatum der Recherche | Prüfer |
|---|---|---|
| Den Haag | 20. Juli 2025 | Chalaftris, Georgios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 25 15 7904

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-07-2025

| Im Recherchenbericht angeführtes Patentdokument | Datum der Veröffentlichung | Mitglied(er) der Patentfamilie | Datum der Veröffentlichung |
|---|---|---|---|
| US 2024154208 A1 | 09-05-2024 | EP 4276220 A1 | 15-11-2023 |
| | | JP 7436922 B2 | 22-02-2024 |
| | | JP WO2022185840 A1 | 09-09-2022 |
| | | KR 20230134552 A | 21-09-2023 |
| | | US 2024154208 A1 | 09-05-2024 |
| | | WO 2022185840 A1 | 09-09-2022 |
| DE 102019212590 A1 | 25-02-2021 | KEINE | |
| EP 4494908 A1 | 22-01-2025 | CN 119324283 A | 17-01-2025 |
| | | EP 4494908 A1 | 22-01-2025 |
| | | US 2025030101 A1 | 23-01-2025 |
| WO 2021009256 A1 | 21-01-2021 | CN 114175374 A | 11-03-2022 |
| | | DE 102019210400 A1 | 21-01-2021 |
| | | EP 4000122 A1 | 25-05-2022 |
| | | US 2022247012 A1 | 04-08-2022 |
| | | WO 2021009256 A1 | 21-01-2021 |

EPO FORM P0461

Für nähere Einzelheiten zu diesem Anhang : siehe Amtsblatt des Europäischen Patentamts, Nr.12/82